# EUROPEAN PATENT APPLICATION

(11) **EP 4 276 141 A1**
(43) Date of publication of application: **15.11.2023**
(21) Application number: 22173363.7
(22) Date of filing: 13.05.2022
(51) Int. Cl.: C08J 9/00, C08G 59/18, C08G 59/40, C08J 9/04, C08J 9/32, C08C 19/00

(54) **ONE-COMPONENT EXPANDABLE THERMOSETTING EPOXY COMPOSITION WITH IMPROVED STORAGE STABILITY**

(71) Applicant: Sika Technology AG, 6340 Baar (CH)
(72) Inventor: WEN, Weijian, Novi, 48374 (US)
(74) Representative: Sika Patent Attorneys

(57) **Abstract**

The present invention relates to a one-component thermosetting epoxy resin composition, comprising a) at least one epoxy resin **A** having on average more than one epoxide group per molecule; b) at least one latent hardener for epoxy resins; c) at least one physical or chemical blowing agent **BA** and d) at least one reaction product **RP** of at least one carboxyl group containing acrylonitrile/butadiene rubber **ABR** with at least one vinyl ether monomer **VEM** of the general formula CH=CH-O-R wherein R is a branched or linear alkyl group, preferably linear alkyl group, having between 8 - 16 carbon atoms. The epoxy resin adhesive is notable for the improved storage stability, especially under warm conditions.

## Description

### Technical field

The present invention pertains to the field of thermally expandable one-component thermosetting epoxy resin composition, in particular for the production of structural foams and a reinforcing element for hollow structures which comprise such a thermally expandable composition, a method for producing such reinforcing elements, their use for reinforcing a hollow structure and a method for reinforcing a hollow structure.

### Prior art

An important area of application of thermally expandable, thermosetting epoxy resin additives is found in vehicle construction, especially when foaming cavities in the body-in-white.

Manufactured products often contain openings and cavities or other hollow parts that result from the manufacturing process and / or are designed for other reasons such as weight reduction. Motor vehicles, for example, comprise several such openings and cavities in the entire vehicle, for example in the vehicle pillars.

It is often desirable to reinforce such openings and cavities with reinforcement elements built into the opening or cavity to reinforce the hollow structure of the manufactured product, for example a vehicle pillar, so that it becomes more resistant to mechanical stress, but with the advantage maintains the low weight of the hollow structure.

Such elements, which are used for the reinforcement, often consist of a carrier made of plastic, metal or another rigid material and one or more layers of an epoxy resin additive attached to it, in particular by injection molding are able to expand their volume when heat or some other physical or chemical form of energy is introduced. Such components can also consist entirely of expandable material. Using an appropriate construction, it is possible to insert the reinforcement element into the cavity of the structure to be reinforced during the manufacturing process, but at the same time to make the inner walls and / or the cavities of the structure to be reinforced accessible to liquids. For example, during the manufacturing process of a vehicle, the hollow parts of a metal frame can still be largely covered by an electro-coating liquid while the reinforcement elements are already in place. During a subsequent heat treatment step, the epoxy resin composition expands and the reinforcing element fills, or reinforces, the cavities.

For example, the document US 2004/0204551 describes a material suitable for reinforcing vehicles in the transportation industry. Said material contains an epoxy resin, a curing agent and an epoxy/elastomer adduct including an epoxy component that is at least partially reacted with an elastomer, wherein the elastomer includes a butyl nitrile rubber.

Further, the document EP 3885398 A describes a material suitable for reinforcing vehicles in the transportation industry contains an epoxy resin, a curing agent and a mixture of epoxy/elastomer adducts including a butyl nitrile rubber. The epoxy resin adhesive displays a more constant expansion properties upon activation conditions after more than 1 month storage time.

Thermally expandable epoxy resin compositions currently used often consist of solid epoxy resins. These compositions also contain blowing agents. The activation of the epoxy resin takes place under activation conditions, such as elevated temperature, while at the same time the blowing agent decomposes and releases gases such as nitrogen or carbon monoxide or physically expands. This leads to the volume expansion mentioned above and the formation of a stable foam which ideally fills the cavity as intended and adheres to its walls.

Such thermally expandable epoxy resin compositions currently have limited storage stability that is reflected in a reduction in the expansion properties upon activation conditions over time. There is a need for thermally expandable epoxy resin compositions with improved storage stability.

### Summary of the invention

It is an object of the present invention, therefore, to provide thermally expandable epoxy resin compositions with improved storage stability, especially more constant expansion properties upon activation conditions after longer storage time, preferably 3 month or more at 35 °C.

Surprisingly it has been found that this object can be achieved by the one-component thermosetting epoxy composition as defined in Claim 1.

Further aspects of the invention are subjects of further independent claims. Particularly preferred embodiments of the invention are subjects of the dependent claims.

### Certain embodiments of the invention

The present invention therefore relates to a one-component thermosetting epoxy resin composition, comprising
a) at least one epoxy resin **A** having on average more than one epoxide group per molecule;
b) at least one latent hardener for epoxy resins; and
c) at least one physical or chemical blowing agent **BA**; and
d) at least one reaction product **RP** of at least one carboxyl group containing acrylonitrile/butadiene rubber **ABR** with at least one vinyl ether monomer **VEM** of the general formula CH=CH-O-R, wherein R is a branched or linear alkyl group, preferably linear alkyl group, having between 8 - 16 carbon atoms.

The epoxy resin composition is one-component, meaning that the constituents of the epoxy resin composition, more particularly the epoxy resin and the hardener, are present in one component, without curing taking place at usual ambient temperature or room temperature. It can therefore be handled in this form, whereas with two-component systems the components cannot be mixed until immediately prior to use.

The curing of the one-component epoxy resin composition is accomplished by heating, typically at a temperature of more than 70°C, preferably in the range from 100 to 220°C.

The prefix "poly" in expressions such as polyol or polyisocyanate denotes that the compound has two or more of the stated groups. A polyisocyanate, for example, is a compound having two or more isocyanate groups.

The expression "independently of one another" as used below means that in the same molecule, two or more identically denoted substituents may have identical or different meanings in accordance with the definition.

The dashed lines in the formulae in this document represent in each case the bond between the substituent in question and the associated remainder of the molecule.

Room temperature refers here to a temperature of 23°C, unless otherwise indicated.

The thermosetting one-component epoxy resin composition comprises at least one epoxy resin **A** having on average more than one epoxide group per molecule. The epoxide group is preferably in the form of a glycidyl ether group.

The fraction of the epoxy resin **A** having on average more than one epoxide group per molecule is preferably from 30 - 90 wt.-%, 35 - 85 wt.-%, 40 - 75 wt.-%, more preferably 45 - 60 wt.-%, based on the total weight of the one-component thermosetting epoxy resin composition.

The epoxy resin **A** having on average more than one epoxide group per molecule is preferably a liquid epoxy resin or a solid epoxy resin, more preferably a solid epoxy resin. The term "solid epoxy resin" is very familiar to the person skilled in the epoxide art and is used in contrast to "liquid epoxy resins". The glass transition temperature of solid resins is above room temperature, meaning that at room temperature they can be comminuted into pourable powders. It is preferred if more than 70 wt.-%, more preferred more than 80 wt.-%, more than 90 wt.-%, more than 95 wt.-%, more than 98 wt.-%, of the epoxy resin **A** is a solid epoxy resin.

Preferred epoxy resins have the formula (II)

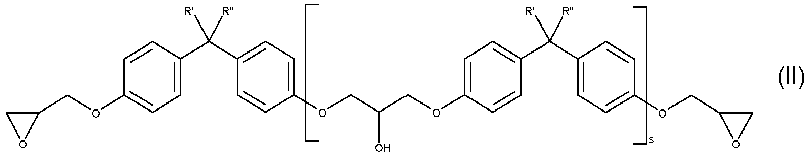

In this formula, the substituents R' and R" independently of one another are either H or CH₃.

In solid epoxy resins, the index s has a value of > 1.5, more particularly from 2 to 12.

Solid epoxy resins of this kind are available commercially, for example, from Dow or Huntsman or Hexion.

Compounds of the formula (II) having an index s of 1 to 1.5 are referred to by the person skilled in the art as semi-solid epoxy resins. For the purposes of the present invention, they are considered likewise to be solid resins. Preferred solid epoxy resins, however, are epoxy resins in the narrower sense, in other words where the index s has a value of > 1.5.

In the case of liquid epoxy resins, the index s has a value of less than 1. Preferably s has a value of less than 0.2.

The resins in question are therefore preferably diglycidyl ethers of bisphenol A (DGEBA), of bisphenol F and also of bisphenol A/F. Liquid resins of these kinds are available for example as Araldite^{®} GY 250, Araldite^{®} PY 304, Araldite^{®} GY 282 (Huntsman) or D.E.R.^{™} 331 or D.E.R.^{™} 330 (Dow) or Epikote 828 (Hexion).

Of further suitability as epoxy resin **A** are what are called epoxy novolacs. These compounds have, in particular, the following formula: 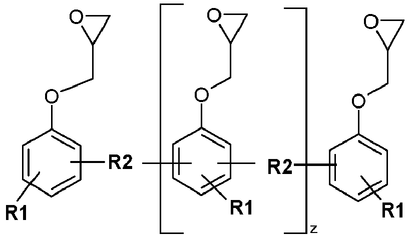 where 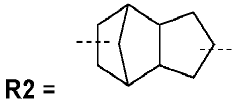 or CH2, **R1** = H or methyl and z = 0 to 7.

More particularly these are phenol-epoxy or cresol-epoxy novolacs (**R2** = CH₂).

Epoxy resins of these kinds are available commercially under the tradename EPN or ECN and also Tactix^{®} from Huntsman, or within the product series D.E.N.^{™} from Dow Chemical.

The epoxy resin **A** is preferably a solid epoxy resin of the formula (II).

The thermosetting one-component epoxy resin composition further comprises at least one latent hardener for epoxy resins. Latent hardeners are substantially inert at room temperature and are activated by elevated temperature, typically at temperatures of 70°C or more, thereby initiating the curing reaction. The customary latent hardeners for epoxy resins can be used. Preference is given to a latent epoxy resin hardener containing nitrogen.

The latent hardener is preferably selected from dicyandiamide, guanamines, guanidines, aminoguanidines and derivatives thereof, substituted ureas, imidazoles and amine complexes, preferably dicyandiamide.

The latent hardener is preferably used in a stoichiometric amount based on the epoxy groups in the composition. The molar ratio of the epoxy groups to the active hydrogen of the latent hardener is preferably 0.8 to 1.2, in particular 0.9 to 1.1, preferably 0.95 to 1.05.

The fraction of the latent hardener is preferably 0.1 to 15 wt%, more preferably 0.2 to 5 wt%, more particularly 0.5 - 3 wt%, based on the total weight of the epoxy resin composition.

The at least one reaction product **RP** of at least one carboxyl group containing acrylonitrile/butadiene rubber **ABR** with at least one vinyl ether monomer **VEM** is preferably a reaction product **RP** of at least one carboxyl group containing acrylonitrile/butadiene rubber **ABR** reacted with at least one vinyl ether monomer **VEM** for 10 - 120 min, preferably 30 - 75 min, more preferably 45 - 75 min, at a temperature from 23 °C - 100 °C, preferably 30 °C - 80 °C, more preferably 40 °C - 60 °C.

It was surprisingly found that said time and temperature range lead to little colour and texture change in combination with good performance of the reaction product comparted to the unreacted acrylonitrile/butadiene rubber **ABR.**

Preferably, a molecular sieve is present during the reaction and/ or is added after the reaction. Preferably, the molecular sieve is selected from the group consisting of natural and synthetic zeolites. Preferably the molecular sieve is present in an amount of 2 - 10 wt.-%, preferably 4 - 8 wt.-%, based on the total amount of acrylonitrile/butadiene rubber **ABR** used for the reaction.

It was surprisingly found that said reaction products **RP,** compared to non-reacted carboxyl group containing acrylonitrile/butadiene rubbers, have a significantly reduced decrease in expansion properties upon activation conditions after longer storage times, preferably after storage times at 35 °C / 50 % humidity for longer than 1 month, more preferably after storage times of 3 month at 35 °C / 50 %. This is evident in Table 1, for example in the comparison of E-1 with Ref.1 and Ref.2 or in the comparison of E-2 with Ref.3 and Ref.4.

The composition preferably contains 5 - 40 wt-%, preferably 10 - 30 wt-%, more preferably 15 - 25 wt-%, of reaction product **RP,** based on the total weight of the one-component thermosetting epoxy resin composition.

Preferably, the carboxyl group containing acrylonitrile/butadiene rubber **ABR** is reacted with the at least one vinyl ether monomer **VEM** at a molar ratio of vinyl ether groups to carboxyl group is from 3: 1 to 1:1, preferably 2.5: 1 to 1.5:1, more preferably 2.2: 1 to 1.8:1.

The at least vinyl ether monomer **VEM** is of the general formula CH=CHO-R wherein R is a branched or linear alkyl group, preferably linear alkyl group, having between 8 - 16 carbon atoms.

Preferred are vinyl ether monomer **VEM** of the general formula CH=CHO-R wherein R is a linear alkyl group having between 8 - 16 carbon atoms, preferably between 10 - 14 carbon atoms, more preferably 12 carbon atoms.

Preferably, the vinyl ether monomer **VEM** is selected from the group consisting of octyl vinyl ether, nonyl vinyl ether, decyl vinyl ether, dodecyl vinyl ether (DDVE), tetradecyl vinyl ether and hexadecyl vinyl ether, preferably consisting of decyl vinyl ether, dodecyl vinyl ether (DDVE) and tetradecyl vinyl ether, more preferably dodecyl vinyl ether (DDVE). These are available from suppliers such as BASF and Aldrich.

It was surprisingly found that reaction products with an vinyl ether monomers with an R having more than 16 carbon atoms does not lead to a significantly reduced decrease in expansion properties upon activation conditions after longer storage times. This is evident in Table 1, for example in the comparison of E-1 with Ref.2 or in the comparison of E-2 with Ref.4.

The at least one carboxyl group (e.g., carboxylic acid groups) containing acrylonitrile/butadiene rubber **ABR** may also include pendant carboxy or carboxyl groups.

The carboxyl group containing acrylonitrile/butadiene rubbers **ABR** preferably have a carboxyl content of 0.005 equivalents per hundred rubber (EPHR) to 0.4 EPHR, more preferably from 0.01 EPHR to 0.2 EPHR and even more preferably from 0.05 EPHR to 0.1 EPHR.

For the carboxyl group containing acrylonitrile/butadiene rubbers **ABR,** the carboxylic groups are preferably provided by a termonomer such as methacrylic acid. The carboxyl groups containing acrylonitrile/butadiene rubbers **ABR** preferably are acrylonitrile/butadiene/methacrylic acid rubbers.

Particularly preferred carboxyl group containing acrylonitrile/butadiene rubbers **ABR** are available from Nippon Zeon under the trade name Hycar, now available under the trade name NIPOL.

The carboxyl group containing acrylonitrile/butadiene rubbers **ABR** preferably include from 10% - 50% by weight nitrile, more preferably 20% - 40% by weight nitrile and even more preferably 25% - 35% by weight nitrile.

The carboxyl group containing acrylonitrile/butadiene rubbers **ABR** preferably have a Mooney Viscosity (ML 1+4 at 100°C) of 20 - 60 MU (Mooney units). The Mooney viscosity refers to the viscosity measure of rubbers. It is defined as the shearing torque resisting rotation of a cylindrical metal disk (or rotor) embedded in rubber within a cylindrical cavity. The dimensions of the shearing disk viscometer, test temperatures, and procedures for determining Mooney viscosity are preferably defined in ASTM D1646 standard.

It can be preferred, if the carboxyl group containing acrylonitrile/butadiene rubbers **ABR** used for the reaction product **RP** has a Mooney Viscosity (ML 1+4 at 100°C) of 20 - 34 MU (Mooney units). This is advantageous with respect to higher values of compressive strength. This can be seen in Table 1, for example in the comparison of E-1 with E-2.

It can also be preferred, if the carboxyl group containing acrylonitrile/butadiene rubbers **ABR** used for the reaction product **RP** has a Mooney Viscosity (ML 1+4 at 100°C) of 35 - 60 MU (Mooney units). This is advantageous with respect to higher values of expansion. This can be seen in Table 1, for example in the comparison of E-1 with E-2.

The one-component thermosetting epoxy resin composition might additionally comprise at least one toughness improver **D.** The toughness improvers **D** may be solid or liquid. More particularly the toughness improver **D** is selected from the group consisting of terminally blocked polyurethane polymers **D1,** liquid rubbers **D2** and core-shell polymers **D3.** With preference the additional toughness improver **D** is selected from the group consisting of terminally blocked polyurethane polymers **D1** and liquid rubbers **D2.** The before mentioned liquid rubbers **D2** are not the same as the carboxyl group containing acrylonitrile/butadiene rubber **ABR.**

The fraction of toughness improver D is preferably from 1 - 10 wt%, more preferably 2.5 -7.5 wt%, based on the total weight of the epoxy resin composition. It can also be preferable if the epoxy resin composition contains less than 2, preferably less than 1, less than 0.5, less than 0.1, most preferably no beforementioned toughness improver **D.**

In one preferred embodiment, the one-component thermosetting epoxy resin composition further comprises at least one filler **F.** Preference here is given to mica, talc, kaolin, wollastonite, feldspar, syenite, chlorite, bentonite, montmorillonite, calcium carbonate (precipitated or ground), dolomite, quartz, silicas (fumed or precipitated), cristobalite, calcium oxide, aluminium hydroxide, magnesium oxide, hollow ceramic beads, hollow glass beads, hollow organic beads, glass beads, glass or carbon fibres and colour pigments. Particularly preferred are fillers selected from the group consisting of calcium carbonate, calcium oxide, talc, glass or carbon fibres and fumed silicas, more preferably talc, glass or carbon fibres and fumed silicas.

The total fraction of the overall filler **F** is advantageously 5-50 weight-%, preferably 15-40 weight-%, 20-35 weight-%, based on the total weight of the epoxy resin composition.

The one-component thermosetting epoxy resin composition may comprise further constituents, especially catalysts, thixotropic agents, plasticizers, solvents, dyes and pigments, corrosion inhibitors, surfactants, defoamers and adhesion promoters.

The one-component thermosetting epoxy resin composition comprises at least one physical or chemical blowing agent **BA.**

Chemical blowing agents are organic or inorganic substances which, under the influence of temperature, humidity, electromagnetic radiation or chemicals, form or split off gaseous substances. Such substances are in particular azo-dicarbonamides, sulfohydrazides, hydrogen carbonates or carbonates. Compounds can be used as physical blowing agents which, for example when the temperature, pressure or volume changes, in particular when the temperature rises, change to the gaseous state of matter and thus form a foam structure through volume expansion. Such physical blowing agents are in particular liquids which evaporate at elevated temperature. Furthermore, gases or low-boiling liquids can be used as physical blowing agents, which are introduced into the composition in microencapsulated form. Both chemical and physical blowing agents are able to produce foam structures in polymer compositions.

Preferred physical blowing agents are expandable microspheres, consisting of a thermoplastic shell which is filled with thermally expandable liquids or gases. Such microspheres are commercially available, for example, under the trade name Expancel^{®} from Akzo Nobel, the Netherlands.

The at least one physical or chemical blowing agent **BA** preferably has an activation temperature from 120 °C to 220 ° C., preferably from 140 ° C to 200 ° C.

The proportion of the blowing agent **BA** is advantageously 0.1-7.5 % by weight, preferably 0.5-5 % by weight, in particular 1-4 % by weight, based on the total weight of the epoxy resin composition.

The one-component thermosetting epoxy resin composition can also contain one or more additives. Examples of additives which can be used are processing aids such as waxes, antioxidants, UV stabilizers, dyes, biocides or flame retardants.

The proportion of processing aid is advantageously 1 to 8% by weight, preferably 2 to 5% by weight, based on the total weight of the composition.

The one-component thermosetting epoxy resin composition preferably has a melt flow index (MFI) of 0.5-15 g / 10 min, in particular 1-10 g / 10 min, preferably 1-5 g / 10 min, most preferably 1-3 g / 10 min.

The MFI is determined at 110 ° C., 2.16 kg in accordance with ASTM D1238, preferably with a melting time of 120 seconds.

The one-component thermosetting epoxy resin composition is preferably an injection moldable mixture, i.e. the mixture has a viscosity suitable for injection molding at the processing temperatures. It is particularly injection-moldable without foaming.

A particularly preferred thermosetting one-component epoxy resin composition comprises:
- 30 - 90 wt.-%, 35 - 85 wt%, 40 -75 wt.-%, more preferably 45 - 60 wt.-%, based on the total weight of the one-component thermosetting epoxy resin composition, of the least one epoxy resin **A** having on average more than one epoxide group per molecule;
- 0.1 to 15 wt.-%, more preferably 0.2 to 5 wt.-%, more particularly 0.5 - 3 wt.-%, based on the total weight of the one-component thermosetting epoxy resin composition, of the at least one latent hardener for epoxy resins, more particularly dicyandiamide;
- 0.1-7.5% by weight, preferably 0.5-5% by weight, in particular 1-4 % by weight, based on the total weight of the epoxy resin composition, of the blowing agent **BA**;
- 5 - 40 wt.-%, preferably 10 - 30 wt.-%, more preferably 15 - 25 wt.-%, of at least one reaction product **RP** of at least one carboxyl group containing acrylonitrile/butadiene rubber **ABR** with at least one vinyl ether monomer **VEM** of the general formula CH=CH-O-R wherein R is a branched or linear alkyl group, preferably linear alkyl group, having between 8 - 16 carbon atoms, based on the total amount of epoxy resin **A**;
- preferably 5-40 weight-%, preferably 20-40 weight-%, based on the total weight of the epoxy resin composition, of a filler **F** selected from the group consisting of calcium carbonate, calcium oxide, talc, glass fibres and fumed silicas, more preferably talc, glass fibres and fumed silicas.

It may further be advantageous if the preferred one-component thermosetting epoxy resin composition consists to an extent of more than 80 weight-%, preferably more than 90 weight-%, more particularly more than 95 weight-%, especially preferably more than 98 weight-%, most preferably more than 99 weight-%, based on the total weight of the epoxy resin composition, of the aforementioned constituents.

The one-component thermosetting epoxy resin composition is preferably tack-free at 23 ° C. The term "tack-free" is understood here to mean immediate tack or "tack", which is so low at 23 ° C that when pressed with a thumb with a pressure of about 5 kg for 1 second on the surface of the one-component thermosetting epoxy resin composition, the thumb does not stick to the surface of the composition layer or the one-component thermosetting epoxy resin composition cannot be raised.

The compositions according to the present invention can be obtained by mixing the components in any suitable mixing device, e.g. In a dispersion mixer, planetary mixer, twin screw mixer, continuous mixer, extruder or twin-screw extruder.

After mixing, the resulting composition can be molded into their desired shape e.g. by extruding, blow molding, pelletizing, injection molding, compression molding, stamping or punching or any other suitable method.

The mixing of the components preferably comprises an extrusion step, the mixed and extruded composition then being granulated. The granulated composition is then preferably brought into its desired shape by injection molding.

The foaming of the one-component thermosetting epoxy resin composition is preferably carried out independently of the curing of the epoxy resin composition, in particular beforehand. As a result, the epoxy resin composition cures only when the foaming of the epoxy resin composition has largely taken place. Otherwise, the epoxy resin composition hardens before it has reached the intended place through the foaming. It is therefore preferred that the curing temperature of the epoxy resin composition is above the foaming temperature of the epoxy resin composition.

Preferably, the expandable epoxy resin compositions show the following reduction in expansion upon activation conditions after storage for 3 month @ 35 °C compared to the expansion of the expandable epoxy resin composition immediately after production of the composition (measurements as described in the experimental section):
- Expansion 30 min @ 180 °C: less than 25 %, preferably less than 15 %, more preferably less than 5 %.

It is further preferred, if the expandable epoxy resin compositions show the following adhesion and mechanical properties (preferably according to measurements as described in the experimental section):
- LSS, 180 °C for 30 mins bake on HDG: ≥1.5 MPa, preferably ≥1.75 MPa, more preferably ≥2 MPa; and/or, preferably and
- Compression strength: ≥5 MPa, preferably ≥6 MPa, more preferably ≥6 MPa.

Another aspect of the invention are reinforcement elements comprising the one-component heat-curing epoxy resin composition, in particular for reinforcement in the cavities of structural components.

The one-component thermosetting epoxy resin composition is preferably applied or attached to a carrier part.

This carrier part can consist of any materials. Preferred materials are plastics, in particular polyurethanes, polyamides, polyesters and polyolefins, preferably high-temperature-resistant polymers such as poly (phenylene ethers), polysulfones or polyethersulfones, which in particular are also foamed; Metals, especially aluminum and steel; or any combination of these materials.

Furthermore, the carrier part can have any structure and structure. For example, it can be solid or hollow or have a lattice-like structure. The surface of the carrier part can typically be smooth, rough or structured. The carrier part can also contribute to the structural reinforcement in addition to its function as a carrier for the foamable material.

It is also possible that reinforcing elements have no carrier part and consist entirely of the one-component thermosetting epoxy resin composition.

The reinforcement elements comprising a carrier part and the one-component heat-curing epoxy resin composition are preferably produced by injection molding.

If the carrier part consists of a material that can be processed by injection molding, a two-component injection molding process is usually used. First, a first component, in this case the carrier part, is injected. After this first component has solidified, the cavity in the mold is enlarged or adapted, or the molded part is placed in a new mold, and a second component, in this case the epoxy resin composition, is molded onto the first component with a second injection unit. If the carrier part consists of a material that cannot be produced by the injection molding process, for example of a metal, the carrier part is placed in an appropriate tool and the epoxy resin composition is injection molded onto the carrier part.

Of course, there is also the possibility of fastening the epoxy resin composition to a carrier part by any other fastening means or method.

For the reinforcing elements mentioned, it is further advantageous if the epoxy resin composition can be foamed and cured thermally, at a temperature from 120 °C to 220 ° C., preferably from 140 ° C to 200 ° C, preferably within a time period at said temperature of 10 to 60 min.

Furthermore, the invention comprises the use of a reinforcing element, as described above, for reinforcing cavities in structural components. Structural components of this type are preferably used in bodies and / or frames of means of transport and transportation, in particular of vehicles on water or on land or of aircraft. The invention preferably includes the use of a reinforcing element according to the invention in bodies or frames of automobiles (in particular A, B, C or D pillars) trucks, railroad cars, boats, ships, helicopters and airplanes, mostly preferably in automobiles.

A further aspect of the present invention therefore relates to a method for reinforcing structural components comprising the steps
i) placing the reinforcement element in a cavity according to the previous description;
ii) heating the reinforcement element to a temperature from 120 °C to 220 °C, preferably from 140 °C to 200 °C, preferably for 10 to 60 min.

Preferably, step i) takes place before step ii).

The invention is elucidated further in the text below by means of examples which, however, are not intended to restrict the invention in any way.

### Examples

Raw materials and test methods used for the testing of the respective properties in the examples were as follows:

| Solid epoxy resin | Solid epoxy resin, (bisphenol A diglycidyl ether based), Dow |
|---|---|
| ABR1 | Nipol NX-775 from Nippon Zeon, Mooney Viscosity (ML 1+4 at 100°C) of 35-53 MU, carboxyl content 0.067-0.099 EPHR, 25-28.5% by weight nitrile. |
| ABR2 | Nipol 1472 X from Nippon Zeon, Mooney Viscosity (ML 1+4 at 100°C) of 25 MU, Carboxyl Content 0.07-0.08 EPHR, 27 % by weight nitrile. |
| Carbon fiber | Milled carbon fibers |
| Talc | Clay mineral composed of hydrated magnesium silicate |
| Process wax | Luwax, ethylene homopolymer wax, BTC Europe |
| Dicy | Dicyandiamide |
| Substituted urea | Accelerator |
| Blowing agent | Dry powder of unexpanded thermoplastic microspheres, Expancel |
| DDVE | Dodecyl vinyl ether, BASF |
| ODVE | Octadecyl vinyl ether, BASF |

### Raw materials used

Preparation of the reaction products (Ref-RP1, Ref-RP2, RP1 and RP2)

150 gram of ABR1, respectively 150 gram of ABR2, were mixed with 35.84 gram of DDVE, respectively 45 gram of ODVE, in the presence of 0.15 gram of 2-ethyl hexyl phosphate in a Brabender mixer at a speed of 35 rpm for 50 min @ 50 °C. Once the conversion was confirmed by FTIR, and 9.3 gram of molecular sieve (zeolite) was added.
Ref-RP1: Reaction product of ABR1 with ODVE
Ref-RP2: Reaction product of ABR2 with ODVE
RP1: Reaction product of ABR1 with DDVE
RP2: Reaction product of ABR2 with DDVE

### Preparation of the compositions

According to the information in Table 1, the reference compositions Ref.1-Ref. 4 and the compositions E-1 and E-2 according to the invention were produced. The amounts in Table 1 are in weight-%.

The raw materials used were mixed with a Brabender mixer (C.W. Brabender Prep-mixer model RS7500) for 20 min @ 90 °C. The produced compositions were then compressed into 3-4 mm thick sheets with a heated hydraulic press at 80 °C. Such sheets were then subsequently cut into desirable dimensions for evaluation testing.

The following measurements were carried out on the test specimens obtained:

### Viscosity determination

Viscosity measurement of the compositions Ref.1-Ref. 4, E-1 and E-2 was carried out on Anton Paar Modular Compact Rheometer. The setting was 110 C° temperature, 20 rad/s in frequency and 3% strain. Sample size was one-inch diameter and 3-5 mm in thickness.

### Determination of foam density / volume expansion (expansion)

As mentioned before, directly after production, the compositions were compressed into 3-4 mm thick sheets. Such sheets were cut into plagues of 3 mm x 12 mm. These plagues were ether quantified directly after production (initial) or after being placed into a humidity chamber at 35 °C / 50% humidity setting for 3 months (3 months 35 °C / 50% humidity).

Volume expansions were quantified for each sample by measuring the density before and after expansion. The densities were determined according to DIN EN ISO 1183 using the water immersion method (Archimedes principle) in deionized water and a precision balance to measure the mass. Expansion was determined by subjecting the specimen to an oven bake for 30 min @ 180 °C.

Volume expansions were quantified directly after production of the compositions (initial) and after

Before expansion, all the compositions Ref.1-Ref. 4, E-1 and E-2 were tack-free at 23 ° C according to the definition described above.

### Adhesion (LSS) determination

The adhesion strength was determined based on SAE J1523. Oil coated HDG plates (25 mm wide, 100mm long and 1mm thick) were used. Composition material with 25 x 25 x 3mm in dimension was placed in between. After clamping the test pieces in place, the test specimen were baked @ 180 °C for 30 min. A tensile tester (Zwick) was used at a speed of 10 mm/min.

### Compression strength expanded material determination

To determine the compression strength properties, the uncured material was brought into a cylindrical tube lined with release paper with an inside diameter of 30 +/- 2 mm in accordance with ASTM D1621 and cured for 30 minutes after the material reached 180°C. After the bake was complete, the material was sanded until the remaining test piece was 30mm in diameter x 60mm in height. After a conditioning time of 24 hours at 23°C, the cylinder was placed between 2 compression plates and the test was started at a speed of 10mm / min to 30% strain. Compression strength was recorded.

**Table 1**

| | | **Ref.1** | **E-1** | **Ref.2** | **Ref.3** | **E-1** | **Ref.4** |
|---|---|---|---|---|---|---|---|
| Solid epoxy resin | [%] | 57.2 | 57.2 | 57.2 | 57.2 | 57.2 | 57.2 |
| ABR1 (unreacted) | [%] | 10 | | | | | |
| RP1 | [%] | | 10 | | | | |
| Ref-RP1 | [%] | | | 10 | | | |
| ABR2 (unreacted) | | | | | 10 | | |
| RP2 | | | | | | 10 | |
| Ref-RP2 | | | | | | | 10 |
| Carbon fiber | [%] | 11.8 | 11.8 | 11.8 | 11.8 | 11.8 | 11.8 |
| Talc | [%] | 13.2 | 13.2 | 13.2 | 13.2 | 13.2 | 13.2 |
| Process wax | [%] | 2.9 | 2.9 | 2.9 | 2.9 | 2.9 | 2.9 |
| Dicy | [%] | 1.2 | 1.2 | 1.2 | 1.2 | 1.2 | 1.2 |
| Substituted urea | [%] | 0.4 | 0.4 | 0.4 | 0.4 | 0.4 | 0.4 |
| Blowing agent | [%] | 3.3 | 3.3 | 3.3 | 3.3 | 3.3 | 3.3 |
| TOTAL | [%] | 100 | 100 | 100 | 100 | 100 | 100 |
| | | | | | | | |
| Expansion 30'@180°C, initial | [%] | 205% | 236% | 170% | 171% | 273% | 280% |
| Expansion 30'@180°C, 3 months | [%] | 150% | 246% | 120% | 121% | 283% | 150% |
| Difference (3 month / initial) | [%] | -27% | +4% | -29% | -29% | +4% | -46% |
| Viscosity @ 110 C°, 20 rad/s, 3% strain | Pa.s | 576 | 563 | 630 | 263 | 482 | 460 |
| Adhesion LLS (initial) | MPa | 0.1 | 2.64 | 2.81 | 2.30 | 2.38 | 2.20 |
| Compression strength expanded material (initial) | MPa | 12.8 | 9.4 | 14.1 | 13.1 | 7.7 | 7.6 |

## Claims

1. One-component thermosetting epoxy resin composition, comprising
a) at least one epoxy resin **A** having on average more than one epoxide group per molecule;
b) at least one latent hardener for epoxy resins; and
c) at least one physical or chemical blowing agent **BA**; and
d) at least one reaction product **RP** of at least one carboxyl group containing acrylonitrile/butadiene rubber **ABR** with at least one vinyl ether monomer **VEM** of the general formula CH=CH-O-R, wherein R is a branched or linear alkyl group, preferably linear alkyl group, having between 8 - 16 carbon atoms.

2. One-component thermosetting epoxy resin composition according to Claim 1, wherein the fraction of the epoxy resin **A** having on average more than one epoxide group per molecule is from 30 - 90 wt.-%, 35 - 85 wt.-%, 40 -75 wt.-%, more preferably 45 - 60 wt.-%, based on the total weight of the one-component thermosetting epoxy resin composition.

3. One-component thermosetting epoxy resin composition according to any of the preceding claims, wherein the epoxy resin **A** is a solid epoxy resin.

4. One-component thermosetting epoxy resin composition according to any of the preceding claims, wherein the at least one carboxyl group containing acrylonitrile/butadiene rubber **ABR** has a carboxyl content of 0.005 equivalents per hundred rubber (EPHR) to 0.4 EPHR, more preferably from 0.01 EPHR to 0.2 EPHR and even more preferably from 0.05 EPHR to 0.1 EPHR.

5. One-component thermosetting epoxy resin composition according to any of the preceding claims, wherein the at least one carboxyl group containing acrylonitrile/butadiene rubber **ABR** includes from 20% - 40% by weight nitrile, preferably 25% - 35% by weight nitrile.

6. One-component thermosetting epoxy resin composition according to any of the preceding claims, wherein the at least one vinyl ether monomer **VEM** is selected from the group consisting of octyl vinyl ether, nonyl vinyl ether, decyl vinyl ether, dodecyl vinyl ether (DDVE), tetradecyl vinyl ether and hexadecyl vinyl ether, preferably consisting of decyl vinyl ether, dodecyl vinyl ether (DDVE) and tetradecyl vinyl ether, more preferably dodecyl vinyl ether (DDVE).

7. One-component thermosetting epoxy resin composition according to any of the preceding claims, wherein the at least one reaction product **RP** of at least one carboxyl group containing acrylonitrile/butadiene rubber **ABR** with at least one vinyl ether monomer **VEM** is preferably a reaction product **RP** of at least one carboxyl group containing acrylonitrile/butadiene rubber **ABR** reacted with at least one vinyl ether monomer **VEM** for 10 - 120 min, preferably 30 - 75 min, more preferably 45 - 75 min, at a temperature from 23 °C - 100 °C, preferably 30 °C - 80 °C, more preferably 40 °C - 60 °C.

8. One-component thermosetting epoxy resin composition according to claim 7, wherein the carboxyl group containing acrylonitrile/butadiene rubber **ABR** is reacted with the at least one vinyl ether monomer **VEM** at a molar ratio of vinyl ether groups to carboxyl group from 3: 1 to 1:1, preferably 2.5: 1 to 1.5:1, more preferably 2.2: 1 to 1.8:1.

9. One-component thermosetting epoxy resin composition according to any of the preceding claims, wherein the fraction of the a least one reaction product **RP** of at least one carboxyl group containing acrylonitrile/butadiene rubber **ABR** with at least one vinyl ether monomer **VEM** of the general formula CH=CH-O-R wherein R is a branched or linear alkyl group, preferably linear alkyl group, having between 8 - 16 carbon atoms, is 5 - 40 wt.-%, preferably 10 - 30 wt.-%, more preferably 15 - 25 wt.-%, based on the total amount of epoxy resin **A.**

10. One-component thermosetting epoxy resin composition according to any of the preceding claims, wherein the latent hardener is selected from dicyandiamide, guanamines, guanidines, aminoguanidines and derivatives thereof, substituted ureas, imidazoles and amine complexes, preferably dicyandiamide.

11. One-component thermosetting epoxy resin composition according to any of the preceding claims, wherein the one-component thermosetting epoxy resin composition further comprises at least one filler **F,** selected from the group consisting of calcium carbonate, calcium oxide, talc, glass fibres and fumed silicas, more preferably talc, glass fibres and fumed silicas.

12. One-component thermosetting epoxy resin composition according to any of the preceding claims, wherein the proportion of the blowing agent **BA** is 0.1-7.5% by weight, preferably 0.5-5% by weight, in particular 1-4% by weight, based on the total weight of the epoxy resin composition

13. One-component thermosetting epoxy resin composition according to any of the preceding claims, wherein the one-component thermosetting epoxy resin composition has a melt flow index (MFI) of 0.5-15 g / 10 min, in particular 1-10 g / 10 min, preferably 1-5 g / 10 min, most preferably 1-3 g / 10 min, determined at 110 ° C., 2.16 kg in accordance with ASTM D1238.

14. One-component thermosetting epoxy resin composition according to any of the preceding claims, wherein the one-component thermosetting epoxy resin composition is tack-free at 23 ° C.

15. A reinforcement element comprising the one-component heat-curing epoxy resin composition according to claims 1 - 14, in particular for reinforcement in the cavities of structural components, preferably in bodies and / or frames of means of transport and transportation.

16. A method for reinforcing structural components comprising the steps
i) placing a reinforcement element according to claim 15 in a cavity of a structural component, preferably in bodies and / or frames of means of transport and transportation;
ii) heating the reinforcement element to a temperature from 120 °C to 220 °C, preferably from 140 °C to 200 °C, preferably for 10 to 60 min.
